# EUROPÄISCHE PATENTANMELDUNG

(11) **EP 0 952 657 A2**
(43) Veröffentlichungstag der Anmeldung: **27.10.1999**
(21) Anmeldenummer: 99104417.3
(22) Anmeldetag: 05.03.1999
(51) Int. Cl.: H02K 21/14, H02K 1/18, H02K 3/46, H02K 9/19

(54) **Transversalflussmaschine**

(30) Priorität: 22.04.1998 DE 19818035
(71) Anmelder: Bayerische Motoren Werke Aktiengesellschaft, 80788 München (DE)
(72) Erfinder: Graef, Markus, 81371 München (DE)

(57) **Zusammenfassung**

Transversalflußmaschine mit einer Statoranordnung (12) umfassend ein Statorgehäuse (20,22',22'',28), wenigstens ein innerhalb des Statorgehäuses (20,22',22'',28) angeordnetes, sich in Umlaufrichtung erstreckendes Polsystem (32',32'',34,42',42'',44) mit im wesentlichen U-förmigem Querschnitt und eine in der Ausnehmung zwischen den Schenkeln des U-förmigen Querschnitts aufgenommene, sich in Umlaufrichtung erstreckende Ringwicklung (36,46) sowie mit wenigstens einer Rotoranordnung (14,16), umfassend zumindest eine Reihe von abwechselnd angeordneten Permanentmagneten (102,102') und Weicheisen-Rückflußelementen (100).

Statorseitig (154) jeweils zwischen der Ringwicklung (36,46) und der Rotoranordnung ein Tragring (24,26) vorgesehen, der an beiden Randbereichen äquidistant beabstandete Ausnehmungen (58) zur Aufnahme von in Richtung der Rotoranordnung vorstehenden Zähnen (52) der Polsystems (32',32'',42',42'') aufweist und zur Stabilisierung des Polsystems (32',32'',34,42',42'',44) und der Ringspule (36,46) dient.

## Beschreibung

Die Erfindung betrifft eine Transversalflußmaschine gemäß dem Oberbegriff des Anspruchs 1 sowie eine Rotoranordnung für eine Transversalflußmaschine gemäß dem Oberbegriff des Anspruchs 10.

### [Stand der Technik]

Permanentmagneterregte Synchronmaschinen nach dem Transversalflußkonzept sind allgemein bekannt und ermöglichen hohe Kraftdichten bei hohem Wirkungsgrad.

Eine Transversalflußmaschine der eingangs genannten Art ist in der EP 0 677 914 beschrieben und weist einen Stator und einen Läufer sowie magnetische Kreise auf. Der Fluß der magnetischen Kreise verläuft im wesentlichen quer zur Bewegungsrichtung des Läufers. Der Stator weist E-förmige Polelemente auf, bei denen die mittleren Polschenkel gegen die äußeren Polschenkel um eine Polteilung versetzt angeordnet sind. Die Permanentmagnete des Läufers sind im wesentlichen kubisch ausgebildet und liegen mit ihrer Flußrichtung senkrecht zu den angrenzenden Polflächen der Polelemente, wobei sie zwischen jeweils zwei Schenkein der E-förmigen Polelemente umlaufen.

Aus der WO 90/09697 ist eine permanentmagneterregte elektrische Maschine mit einem Außenstator und mindestens einem dazu koaxialen Innenstator beschrieben. Zwischen diesen läuft ein Rotor mit zwei im Axialabstand voneinander verlaufenden parallelen Reihen von Permanentmagneten um. In Umfangs- und Axialrichtung benachbarte Permanentmagnete weisen verschiedene Polarität auf.

Zur industriellen Fertigung einer solchen Maschine sind Außen- und Innenstator jeweils dreiteilig aus einem Jochring und zwei laminierten Polringen ausgebildet. Die Polringe tragen radial vorstehende Polzähne, die in Umlaufrichtung im Abstand von jeweils einer Polteilung angeordnet sind. Die geblechten und segmentierten Polringe pressen sich in Radialrichtung an den Jochring an und stützen sich in Achsrichtung an einen vom Jochring radial vorstehenden Ringsteg ab. Zwischen den Polringen und dem Ringsteg liegt jeweils ein Wicklungshalbstrang einer ringförmigen Polwicklung. Die Wicklungshalbstränge im Außen- und Innenstator bilden jeweils die Polwicklung.

Aus der WO 88/06375 ist eine elektrische Maschine in Transversalflußausführung bekannt, bei der eine Verbesserung insofern vorgesehen ist, als die Polanordnung auf dem gesamten Umfang gleich ausgeführt ist und Streuflußkomponenten in Längsrichtung vermieden sind. Insgesamt wird mit dieser Anordnung erreicht, daß sich der magnetische Widerstand für die Feldkomponenten verringert.

In der WO 95/04399 ist eine Transversalflußmaschine beschrieben, bei der mehrere Wicklungsstränge im Stator in Form von koaxial zur Maschinenachse angeordneten ringförmigen Spulen vorgesehen sind. Diese sind innerhalb in Umfangsrichtung angeordneten Folgen von C-förmigen Weicheisenelementen eingebettet. Der Rotor bzw. die Teilrotoren bestehen aus Permanentmagnetelementen und flußführenden Weicheisenelementen, die in nutähnlichen Ausnehmungen der Stator-Weicheisenelemente umlaufen.

Schließlich ist in der EP 0 712 199 eine Transversalflußmaschine mit einer Anzahl von äußeren Stator-Weicheisenelementen, mit einer Mehrzahl von inneren Stator-Weicheisenelementen, mit jeweils einer Ringwicklung des äußeren und inneren Stators und mit einem Rotor dargestellt, welcher wiederum aus miteinander abwechselnden Magneten und Weicheisenelementen besteht. Bei dieser Transversalflußmaschine verjüngen sich die Magnete von außen nach innen, und die Breite der inneren Stator-Weicheisenelemente ist kleiner als die Breite der äußeren Stator-Weicheisenelemente.

Allen vorgenannten Transversalflußvorrichtungen haftet der Nachteil an, daß sie im Übergangsbereich Stator-Rotor nicht stabil genug ausgebildet sind. Aufgrund von Schwingungen, hervorgerufen durch die sich örtlich ständig ändernden Anziehungverhältnissen zwischen dem sich drehenden Rotor und dem Stator, kommt es zu einer nicht erwünschten Geräuschentwicklung. Zudem ist bei den oben diskutierten Transversalflußmaschinen keine optimale Kühlung sichergestellt. Gerade bei Hochleistungstransversalflußmaschinen kann jedoch eine Wärmeentwickung in einer Größenordnung entstehen, daß sich aufgrund des höheren Leiterwiderstandes der Wirkungsgrad verschlechtert und die Maschine wegen der bei höheren Temperaturen schlechteren Magneteigenschaften weniger Leistung abgibt. Im Extremfall kann sogar deren Funktionsfähigkeit gefährdet werden. Die maximale Dauerleistung ist bei ineffizienter Kühlung zudem niedriger.

### [Aufgabe der Erfindung]

Aufgabe der Erfindung ist es, eine im Betrieb geräuscharme Transversalflußmaschine der eingangs genannten Art derart weiterzuentwickeln, daß deren mechanische Stabilität, deren Wirkungsgrad und deren Leistungsfähigkeit erhöht ist und ein funktionssicherer Betrieb im Hochleistungsbereich sichergestellt werden kann. Darüber hinaus soll eine einfache und kostengünstige Herstellung ermöglicht werden.

Diese Aufgabe wird bei einer Transversalflußmaschine durch die Merkmale des Anspruchs 1 gelöst. Ferner trägt zur Lösung der Aufgabe eine Rotoranordnung für eine Transversalflußmaschine gemäß den Merkmalen des Anspruchs 10 bei.

Gemäß dem Anspruch 1 ist bei einer Transversalflußmaschine statorseitig jeweils zwischen der Ringwicklung und der Rotoranordnung ein Tragring vorgesehen, der an seinen beiden Randbereichen äquidistant beabstandete Ausnehmungen zur Aufnahme von in Richtung der Rotoranordnung vorstehenden Zähnen eines Pols oder Polsystems aufweist.

Der Tragring dient einerseits zur Stabilisierung der Gesamtheit Polsystem und Ringspule, so daß sich die einzelnen Polelemente bei einem Betrieb der Transversalflußmaschine weder in Richtung auf den Rotor, noch parallel dazu bewegen können. Damit werden Schwingungen im Statorbereich vermieden, die zum einen zu einer erhöhten Geräuschentwicklung führen.

Überdies bewirkt der Tragring eine thermische Abschirmung von Rotor und Stator, so daß in der Statoranordnung entstehende Wärme nicht ungehindert auf den Rotor übertragen werden kann.

Die Stärke der Magnetflußströme im Rotor - also in den Permanentmagneten und den Weicheisen-Rückflußelementen - hängt von der Temperatur der Permanentmagnete ab; insbesondere verschlechtern sich die Magneteigenschaften bei steigenden Temperaturen. Ab bestimmten Grenztemperaturen gehen die Magneteigenschaften der Permanentmagnete ganz verloren. Die oben genannte Abschirmung ist daher insbesondere bei Hochleistungs-Transversalflußmaschinen, bei denen - zumindest statorseitig - eine hohe Wärmeentwicklung stattfindet, von großem Vorteil.

Zudem ist es möglich, den Tragring zu kühlen. In diesem Fall läßt sich die im Stator entstehende Wärme auf einfache Weise abführen und so die maximale Dauerleistung der gesamten Anordnung erhöhen. Die Abschirmung zwischen Stator und Rotor erfährt mit dieser Maßnahme nochmals eine Verbesserung.

Gemäß einer vorteilhaften Ausführungsform kann eine Kühlung des Tragrings dadurch erreicht werden, daß in diesem wenigstens ein Kühlkanal ausgebildet ist. Beim Durchströmen des Kühlkanals mit einer geeigneten Flüssigkeit kann die Wärme einfach und effizient abtransportiert werden.

Schließlich stellt der Tragring einen optimalen Wicklungsträger für die Ringspule aber auch das Polsystem dar, so daß sich insgesamt eine kompakte, jedoch sehr leicht herzustellende Gesamteinheit angeben läßt.

Gemäß einer bevorzugten Ausführungsform sind die Ausnehmungen in den Tragringen zur Rotoranordnung hin verjüngend - beispielsweise im wesentlichen konisch - ausgebildet. Durch eine komplementäre Ausbildung der in den Ausnehmungen aufgenommenen Zähne des Polsystems läßt sich die Stabilität der Gesamtanordnung, insbesondere in Richtung auf den Rotor hin, noch verbessern. Im übrigen nimmt die Induktion in den konischen Zähnen ab. Zudem steht für die Flußführung im Poljoch der ganze Umfang der Maschine zur Verfügung. Die Dicke des Poljoches in radialer Richtung unterliegt keinerlei Beschränkung, so daß sich im Poljoch beliebige Werte der Induktion einstellen lassen. Dies führt zu geringeren Eisenverlusten, was bei einer Maschine, die bei hohen Frequenzen betrieben werden soll, von Vorteil ist.

Gemäß einer besonderen Ausführungsform besteht der Tragring aus einem keramischen Material. Ein solches Material vereinigt die Eigenschaften einer hohen mechanischen Festigkeit, einer elektrischen Inaktivität, einer guten thermischen Leitfähigkeit und/oder eines unmagnetischen Materials. Die Kühlkanäle in einem solchen Tragring können durch Zusammenfügen zweier Tragringteile hergestellt werden, wobei wenigstens ein Teil umlaufende, beispielsweise nutförmige Ausnehmungen besitzt.

Im Hinblick auf eine besonders einfache und kostengünstige Variante besteht jedes Polsystem vorzugsweise aus einem ringförmigen Poljoch und zwei seitlich daran anschließenden Polringen. Jedes dieser drei Teile kann gesondert hergestellt werden, beispielsweise durch die Zusammenfügung von einzelnen Blechen bzw. Aufwickeln eines Blechstreifens. Die Polringe können wie konventionelle Blechschnitte durch Stanzen hergestellt werden.

Vorzugsweise sind die Polringe an ihrem poljochseitigen Bereich durch Einschnitte oder Schlitze perforiert. Mit einer solchen Maßnahme läßt sich die Bildung von Wirbelströmen beim Magnetflußübergang vom Poljoch zu den Polringen oder umgekehrt vermindern, so daß Verluste klein gehalten werden können.

Eine besonders einfache und kostengünstige Ausführungsform der Erfindung ist dadurch gekennzeichnet, daß die einzelnen Statorelemente, wie beispielsweise Poljoch, Polringe, Ringspule und Tragringe als separate Teile ausgebildet sind, die mittels eines Statorgehäuses zusammengehalten werden. Eine solche Transversalflußmaschine läßt sich besonders leicht herstellen.

Eine Verringerung der Geräuschentwicklung ist dann möglich, wenn die dem Rotor zugewandte Fläche der Statoranordnung eine glatte Oberfläche aufweist. Diese Fläche setzt sich aus der rotorzugewandten Seite des Tragrings oder der Tragringe sowie den rotorzugewandten Flächen der Zähne der Polringe zusammen.

Eine weitere Kühlmöglichkeit ergibt sich, wenn im Statorgehäuse zumindest ein Kühlkanal ausgebildet ist. Bei einer Ausbildung von mehreren Kühlkanälen sowohl im Statorgehäuse als auch im Tragring kann die gesamte Statoranordnung auf überaus wirksame Art und Weise gekühlt werden.

Zur Lösung der oben genannten Aufgabe muß jedoch nicht nur statorseitig auf eine stabile Anordnung geachtet werden, sondern auch rotorseitig. Daher wird die eingangs gestellte Aufgabe auch durch eine Rotoranordnung gemäß Anspruch 11 gelöst, bei der die sich in Umlauf erstreckende Reihe von abwechselnd angeordneten Permanentmagneten und Weichseisen-Rückflußelementen von einem Rotorträger gehalten ist, der an jeder Seite einen äußeren Befestigungsring mit einem sich am statorseitigen äußeren Ende desjenigen axialen nach innen erstreckenden Vorsprung aufweist. Diese Maßnahme verhindert, daß sich die einzelnen Elemente - insbesondere Permanentmagnete und Weicheisen-Rückflußelemente - durch Anziehungs- oder Fliehkräfte in Richtung des Stators bewegen.

Verlaufen zwei Reihen von abwechselnd angeordneten Permanentmagneten und Weicheisen-Rückflußelementen parallel nebeneinander, so ist dazwischen vorzugsweise ein mittlerer Befestigungsring vorgesehen, an dessen statorseitigem äußeren Ende ein ringförmiges Halteband anordenbar ist. Das ringförmige Halteband dient, genauso wie der Vorsprung des äußeren Befestigungsrings, zur Fixierung der Rotorelemente, insbesondere entgegen einer Bewegung in Richtung des Stators.

Bei einer besonders bevorzugten Ausführungsform werden im mittleren Befestigungsring äquidistant voneinander beabstandete Ausnehmungen auf Höhe der Weicheisen-Rückflußelemente für die Aufnahme von Permanentmagneten vorgesehen. Die Anordnung der Permanentmagneten in den Ausnehmungen des mittleren Befestigungsringes steigert nochmals die Leistungsfähigkeit der Maschine.

Eine verminderte Streuung der Magnete, die nicht in den Ausnehmungen des mittleren Befestigungsringes liegen, wird durch eine verlängerte Ausbildung der Permanentmagnete in radialer und/oder axialer Richtung gegenüber den Weicheisen-Rückflußelementen erreicht.

Die Laufruhe der Transversalflußmaschine kann insbesondere durch eine plane Ausführung der statorseitigen Fläche des Rotors nochmals erhöht werden.

### [Beispiele]

Eine besondere Ausführungsform der Erfindung wird, auch hinsichtlich weiterer Vorteile und Merkmale, anhand der beiliegenden Zeichnungen beschrieben. In den Zeichnungen zeigen
- Fig. 1: eine perspektivische Teilschnittansicht einer Ausführungsform einer erfindungsgemäßen Transversalflußmaschine, bestehend aus einer Statoranordnung mit zwei Statorphasen und einer Rotoranordnung mit zwei Rotorphasen,
- Fig. 2: eine perspektivische Teilschnittansicht der Statoranordnung der Transversalflußmaschine gemäß Fig. 1,
- Fig. 3: eine Schnittansicht durch die Statoranordnung der Transversalflußmaschine gemäß Fig. 1,
- Fig. 4: eine Schnittdarstellung entlang Ebene A-A aus Fig. 3,
- Fig. 5: eine perspektivische Teilschnittansicht der Polringe einer Statoranordnung der Transversalflußmaschine gemäß Fig. 1,
- Fig. 6: eine perspektivische Teilschnittansicht der Tragringe einer Transversalflußmaschine gemäß Fig. 1,
- Fig. 7: eine perspektivische Teilschnittansicht eines mittleren Gehäuseteils der Transversalflußmaschine gemäß Fig. 1,
- Fig. 8: eine Schnittdarstellung einer Rotoranordnung der Transversalflußmaschine gemäß Fig. 1 entlang der Ebene A-A aus Fig. 11,
- Fig. 9: eine Schnittdarstellung der Rotoranordnung der Transversalflußmaschine gemäß Fig. 1 entlang Ebene B-B aus Fig. 11,
- Fig. 10: eine Teilschnittansicht der Rotoranordnung entlang Ebene D-D aus Fig. 9,
- Fig. 11: eine Teilschnittdarstellung der Rotoranordnung entlang Ebene E-E aus Fig. 8 und
- Fig. 12: eine Teilschnittdarstellung der Rotoranordnung entlang Ebene C-C aus Fig. 9.

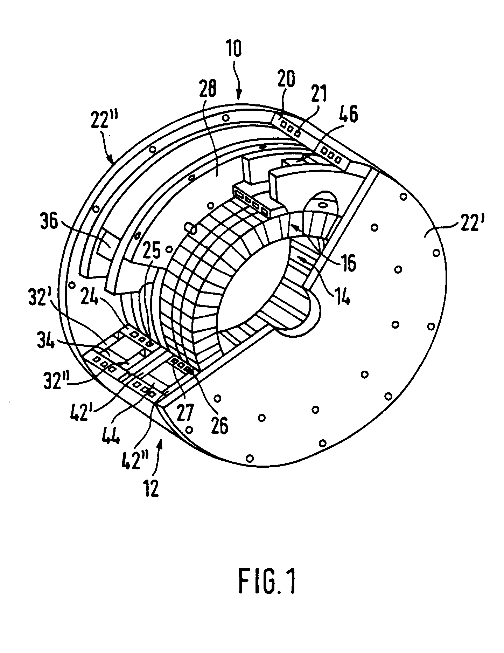

In Fig. 1 ist eine perspektivische Teilschnittansicht einer Gesamtanordnung eines Ausführungsbeispiels einer erfindungsgemäßen Transversalflußmaschine 10 dargestellt. Diese umfaßt eine Statoranordnung 12 und eine koaxial und radial innerhalb dazu angeordnete Rotoranordnung 14, 16. Sowohl die Stator- 12 als auch die Rotoranordnung umfassen zwei Phasen. Für jede Phase ist ein eigenes Pol- bzw. Ankersystem mit einer jeweils zugeordneten Ringspule 36, 46 vorgesehen. Jedes Polsystem mit Ringspule 36, 46 verläuft ringartig in Umlaufrichtung sowie axial parallel zueinander.

Die gesamte Transversalflußmaschine 10 ist in einem Gehäuse angeordnet, welches sich beim vorliegenden Beispiel aus einem ringförmigen äußeren Gehäuseteil 20 und sich seitlich daran anschließenden Gehäuseseitenteilen 22', 22'' zusammensetzt. Die aneinander anliegenden Gehäuseteile sind miteinander verschraubt. Die äußeren Gehäuseseitenteile 22', 22'' decken die Öffnung des ringförmigen äußeren Gehäuseteils 20 ab. Mittig in den Gehäuseseitenteilen ist eine Bohrung zum Austritt einer nicht dargestellten Antriebswelle vorgesehen.

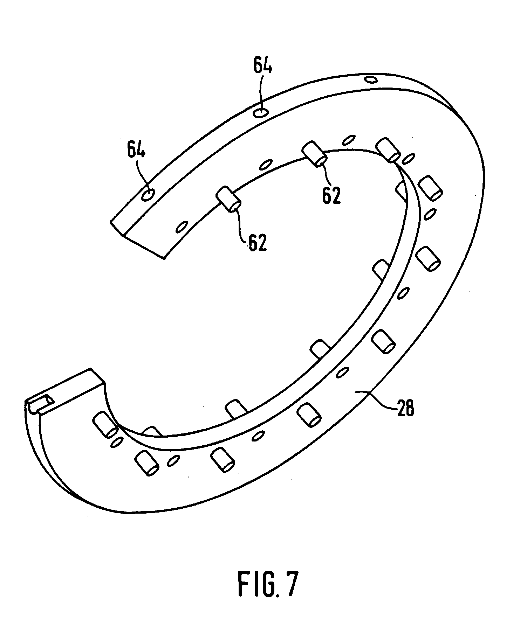

Darüber hinaus ist im vorliegenden Fall eine mittlere Gehäusewand 28 vorgesehen, welche sich mittig von dem ringförmigen äußeren Gehäuseteil 20 nach innen erstreckt und in Fig. 7 genauer dargestellt ist. Die mittlere ringförmige Gehäusewand 28 trennt vorliegend die zwei Phasen des Stators und umfaßt axial verlaufende Zapfen, die mit der später noch zu beschreibenden Pol- bzw. Ankeranordnung einer jeden Phase zur Ausrichtung und Fixierung in Eingriff gebracht werden. An der äußeren Umfangsfläche der mittleren Gehäusewand 28 sind Gewindebohrungen vorgesehen, mittels welcher sich die mittlere Gehäusewand 28 mit dem ringförmigen äußeren Gehäuseteil 20 fest verbinden (hier: verschrauben) läßt.

Jede Phase der Statoranordnung besteht aus einem Polsystem 32', 32'', 34 bzw. 42', 42'', 44, einer Ringwicklung 36 bzw. 46 und einem zugehörigen Statortragring 24 bzw. 26.

Jedes Polsystem 32', 32'', 34 bzw. 42', 42'', 44, ist im vorliegenden Beispiel dreiteilig aufgebaut, und zwar mit einem Poljoch 34, 44 und sich an dessen Stirnseiten anschließenden Polringen 32', 32'' sowie 42', 42''. Insgesamt ist jedes Polsystem als ringförmige Einheit mit im wesentlichen U-förmigem Querschnitt ausgebildet.

Alternativ können sich die Polringe radial innerhalb an die beiden seitlichen Bereiche des Poljochs anschließen. Das Gehäuse müßte dann entsprechend ausgebildet werden.

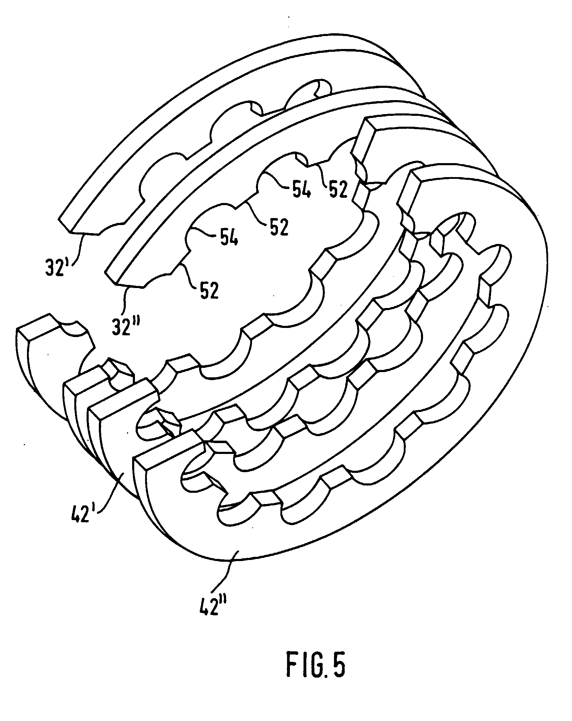

Gemäß Fig. 5 weisen die Polringe 32', 32'' und 42', 42'' in ihrem radial inneren Bereich äquidistant voneinander beabstandete Zähne 52 auf, die durch ebenso äquidistant beabstandete, etwa halbkreisförmige Ausnehmungen 54 gebildet sind.

Über die Zähne 52 der Polringe 32', 32'' und 42', 42'' findet - wie später noch beschrieben - der Magnetfluß zu den Elementen der Rotoranordnung statt. Insofern hat das vorliegende Polsystem die gleiche Wirkung, wie eine gleiche Anzahl von entsprechend der Anzahl der Zähne eines Polrings voneinander beabstandeten U-förmigen Weicheisenpolelementen. Allerdings lassen die bei diesem Ausführungsbeispiel vorgestellten Polsysteme eine sehr viel einfachere und kostengünstigere Herstellung zu. Außerdem nimmt die Induktion in den konischen Zähnen ab. Dies führt zu geringeren Eisenverlusten.

Sowohl die Polringe 32', 32'' und 42', 42'' wie auch die Poljoche 34 und 44 sind aus einzelnen Blechen (geblechte Polringe) einfach herzustellen.

Alternativ kann das Poljoch auch anders aufgebaut sein, beispielsweise aus einer Vielzahl von separaten, in Umfangsrichtung des Poljochs angeordneten Blechstreifen. Mit dieser Maßnahme lassen sich Wirbelstromverluste im Poljoch minimieren.

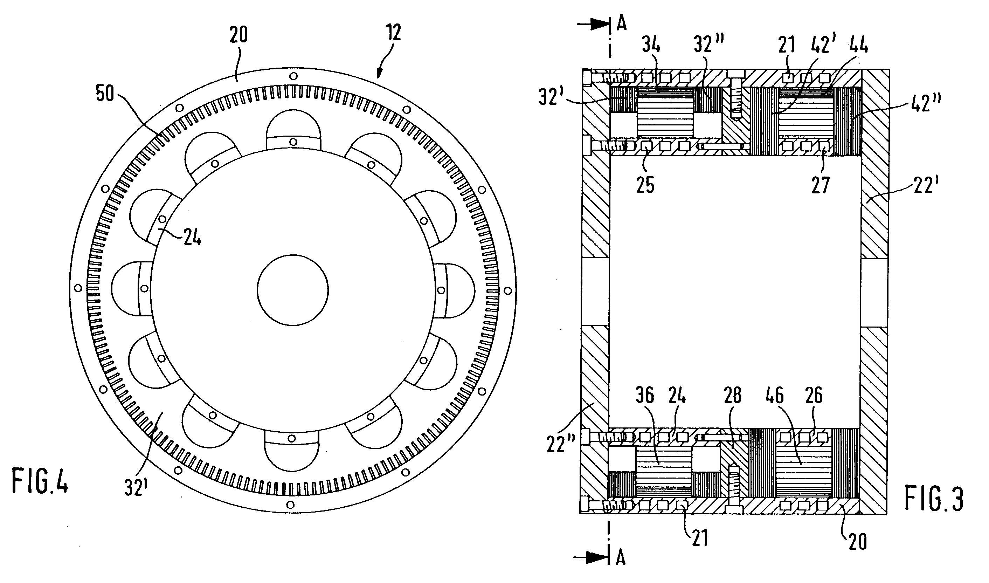

Zur Verminderung der Wirbelstromverluste beim Übergang von den Poljochen 34, 44 zu den Polringen 32', 32'' und 42', 42'' bzw. umgekehrt sind an den äußeren Bereichen der Polringe 32', 32'' und 42', 42'' in Umlaufrichtung sich radial nach innen erstreckende Einkerbungen 50 vorgesehen (vgl. Fig. 4) die eine Art Perforation ergeben.

In Fig. 4 ist eine Schnittansicht gemäß Ebene A-A aus Fig. 3 dargestellt, aus der zu erkennen ist, daß beim vorliegenden Ausführungsbeispiel die beiden Phasen 1 und 2 um eine Polteilung gegeneinander winkelverdreht sind. Damit ist ein problemlos steuerbarer Anlauf beim Betrieb der Transversalflußmaschine 10 sichergestellt.

Ferner ist aus Fig. 3 zu erkennen, daß jedes Polsystem bestehend aus Polringen 32', 32'' und 42', 42'' und zugehörigem Poljoch 34, 44 auf einem jeweils zugeordneten Statortragring 24, 26 angeordnet ist.

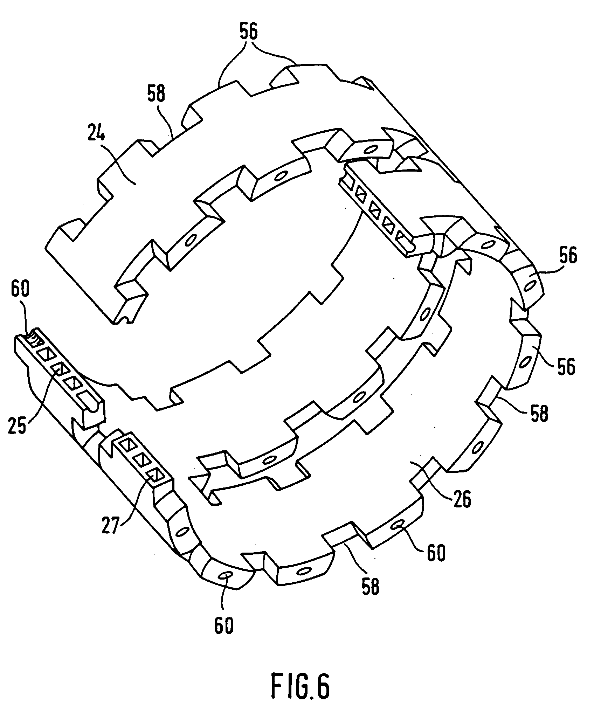

Diese Statortragringe 24 und 26 sind in einer perspektivischen Detailansicht in Fig. 6 dargestellt. Deutlich ist zu erkennen, daß die im wesentlichen ringförmig ausgebildeten Statortragringe 24 und 26 entsprechend der Anordnung der Zähne 52 der Polringe ausgebildete Ausnehmungen 58 aufweisen, in welche die Zähne 54 der Polringe 32', 32'' und 42', 42'' im zusammengebauten Zustand eingreifen. Beim vorliegenden Ausführungsbeispiel sind sowohl die Ausnehmungen 58 wie auch die eingreifenden Zähne zum Rotor hin verjüngend ausgeführt, so daß eine extrem paßgenaue und stabilitätserhöhende Zusammenfügung von Polsystem und Tragring 24, 26 möglich ist. Diese Art des Zusammenbaus ergibt eine extrem gute Stabilität, so daß Bewegungen der Zähne 52 des Polsystems sei es in Richtung des Rotors oder parallel zu dessen Laufrichtung vermieden werden.

Die jeweils zugehörige Ringwicklung 36, 46 ist in der von dem U-förmigen Profil des Polsystems und dem jeweiligen Tragring 24, 26 gebildeten Ausnehmung aufgenommen. Insgesamt ist somit eine recht kompakte Einheit erreicht.

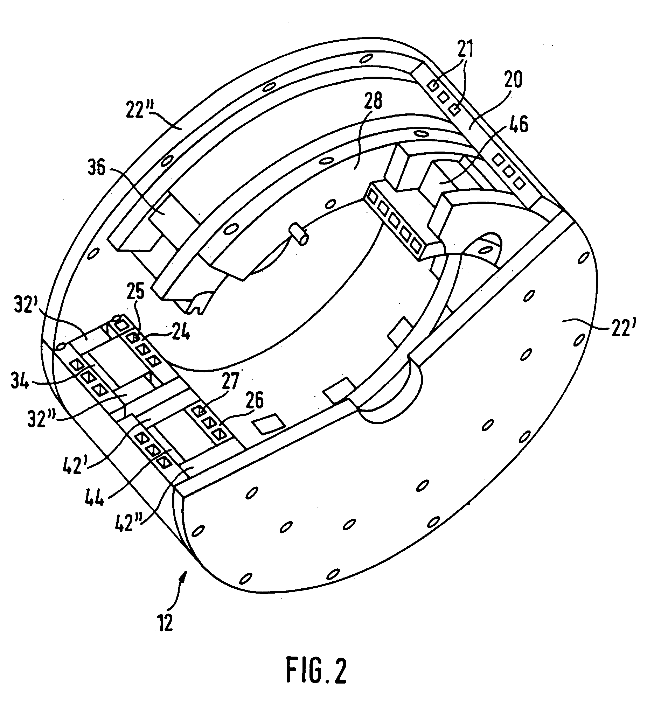

Wie unter anderem aus den Figuren 1 und 2 zu erkennen ist, sind in den Statortragringen 24 und 26 jeweils drei in Umlaufrichtung ausgebildete Kühlkanäle 25, 27 vorgesehen. In diesen Kühlkanälen 25, 27 kann die in der Transversalflußmaschine entstehende Wärme sehr schnell und effizient abtransportiert werden. Damit handelt es sich bei den vorliegend beschriebenen Statortragringen 24 und 26 um multifunktionelle Elemente. Sie gewährleisten zum einen eine besondere Stabilität jedes Polsystems bzw. der Statoranordnung, so daß Schwingungen vermieden werden können. Dadurch läßt sich die Geräuschentwicklung vermindern. Zum anderen kann mittels der Statortragringe eine besonders wirkungsvolle Kühlung sowohl der Statoranordnung wie auch des Rotors vorgenommen werden. Dies wirkt sich insgesamt positiv auf den Wirkungsgrad der Transversalflußmaschine aus. Insbesondere bei Hochleistungs-Transversalflußmaschinen kann eine Wärmeentwicklung auftreten, bei der die gesamte Funktionsweise der Anordnung gefährdet ist. Mit anderen Worten läßt sich auch die maximale Dauerleistung einer Transversalflußmaschine mit einer solch effizienten Kühlung erhöhen.

Eine weitere Verbesserung bringt die zusätzliche Kühlung des Statorgehäuses . Im vorliegenden Fall sind - wie beispielsweise aus den Figuren 1 und 2 ersichtlich - im äußeren Gehäuseteil 20 zusätzliche Kühlkanäle 21 vorgesehen, die eine noch effizientere Kühlung der Statoranordnung zulassen.

Die besonders einfache Konstruktion der vorliegenden Transversalflußmaschine 10 geht beispielsweise aus Fig. 3 hervor. Erkennbar ist an dieser Schnittdarstellung, daß die Gehäuseseitenteile 22' und 22'' jeweils mit dem äußeren Gehäuseteil 20 aber auch mit den jeweils daran anliegenden Statortragringen 24 bzw. 26 verschraubt sind. Die Statortragringe 24 und 26 sind wiederum über die mittlere Gehäusewand 28 miteinander sowie mit dem äußeren Gehäuseteil 20 verbunden. Durch diese Anordnung entstehen ringförmige Hohlräume, in denen die jeweiligen Polsysteme mit den jeweiligen zugeordneten Ringwicklungen 36 und 46 nicht nur aufgenommen, sondern auch fest zusammengefügt sind.

Die jeweilige Einheit 32', 32'', 34, 36 bzw. 42', 42'', 44, 46, bestehend aus Polringen, Poljoch und Ringwicklung, ist also lose aber dennoch sehr kompakt in diesen Ausnehmungen zusammengehalten.

Im übrigen stellen die Statortragringe 24 und 26, wenn diese aus einem magnetischen Material angefertigt sind, eine Rückschlußmöglichkeit für Mittelmagnete (102') der Rotoranordnung dar, die derart zwischen den Zähnen stehen, daß ihre Feldlinien die Spule nicht durchsetzen.

Alternativ kann natürlich die mittlere Gehäusewand 28 auch aus zwei Teilen bestehen, so daß für jede Phase der Statoranordnung ein eigenes Gehäuse zur Verfügung steht, welche wiederum miteinander verschraubt werden können.

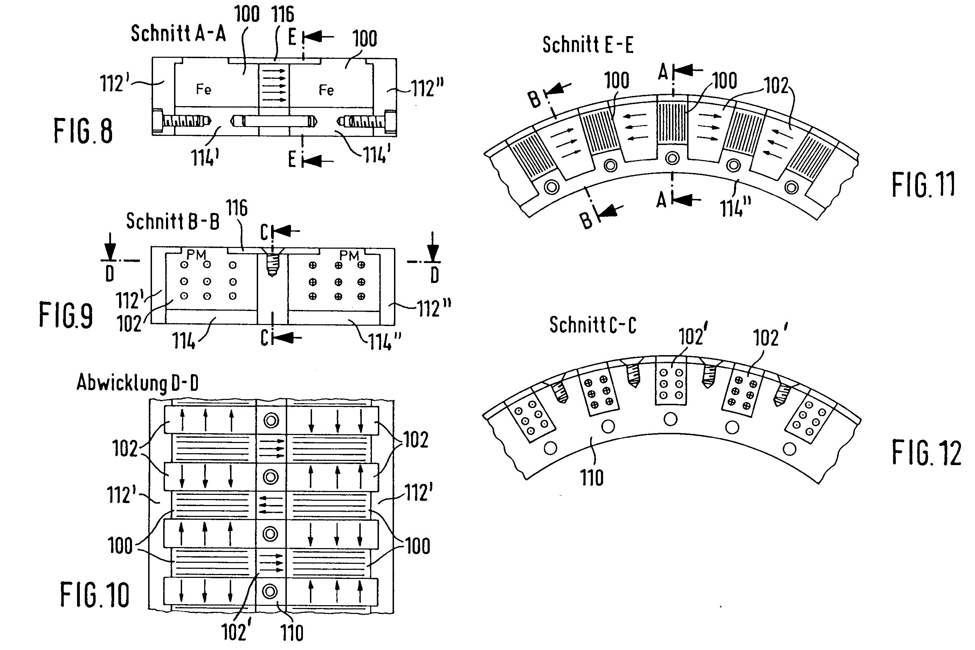

Eine Ausführungsform einer Rotoranordnung, wie sie in Fig. 1 dargestellt ist, wird nachfolgend anhand der Fig. 8 bis 12 näher erläutert. Die Funktionsweise eines Rotors ist hinreichend bekannt und soll daher vorliegend nicht ausgeführt werden.

Ein Schwachpunkt bei bisherigen Transversalflußmaschinen ist es, einerseits eine sichere Befestigung der einzelnen Rotorelemente der Rotoranordnung gegen die auftretenden, radial nach außen zeigenden Fliehkräfte zu gewährleisten, andererseits aber einen einfachen und kostengünstigen Aufbau anzugeben, wobei sich der Herstellungsprozeß der Rotoranordnung automatisieren lassen soll.

Beim vorliegenden Ausführungsbeispiel einer Rotoranordnung 14, 16 sind zwei Reihen von jeweils abwechselnd angeordneten Permanentmagneten 102 und Weicheisen-Rückflußelementen 100 mit der durch Pfeile gekennzeichneten Magnetflußausrichtung vorgesehen. Diese beiden Reihen verlaufen ringförmig parallel zueinander, wie dies aus den Fig. 1 und 8 bis 12 zu erkennen ist. Die abwechselnde Ausrichtung der Permanentmagnete 102 ist ebenfalls beispielsweise aus Fig. 10 zu entnehmen. Jede Reihe von abwechselnd angeordneten Permanentmagneten 102 und Weicheisen-Rückflußelementen 100 ist auf einem Rotortragring 114, 114' angeordnet, wobei die Permanentmagnetelemente sowohl axial als auch radial über die Weicheisen-Rückflußelemente 100 überstehen. Mit dieser Maßnahme läßt sich ein zu großer Streufluß bei den Permanentmagneten 102 verhindern.

Zwischen beiden Reihen der abwechselnd angeordneten Permanentmagnete 102 und Weicheisenelemente 100 ist ein mittlerer Befestigungsring 110 angeordnet, an dessen äußerem radialen Ende wiederum ein ringförmiges Halteband 116 angeschraubt ist. Dieses Halteband 116 steht axial jeweils über den mittleren Befestigungsring 110 über und stützt die Permanentmagnete 102 und Weicheisen-Rückflußelemente 100 in Statorrichtung ab. An jedem äußeren Ende eines Rotortragrings 114, 114'' ist stirnseitig jeweils ein äußerer Befestigungsring 112' bzw. 112'' angeschraubt, welcher an dessen radial äußerem Ende einen in Axialrichtung nach innen vorstehenden Vorsprung aufweist, der sich in gleichem radialen Abstand wie das ringförmige Halteband 116 erstreckt. Die beiden Vorsprünge der äußeren Befestigungsringe 112, 112'' halten die Permanentmagnete 102 und Weicheisen-Rückflußelemente 100 krallenartig und stützen sie gegen die Fliehkraft in Richtung des Stators ab.

Wie aus den Fig. 8 und 10 bis 12 zu erkennen ist, weist der mittlere Befestigungsring 110 in Höhe der Weicheisen-Rückflußelemente 100 Ausnehmungen auf, in denen weitere Permanentmagnete 102' gemäß der in Pfeilrichtung dargestellten Ausrichtung angeordnet sind. Diese Permanentmagnete 102' sind bezüglich ihrer Flußrichtung derart angeordnet, daß eine Flußtrennung in geeigneter Weise erreicht wird. Sie werden ebenfalls mit dem Halteband 16 gegen die Fliehkräfte gesichert.

Durch die oben beschriebene Rotoranordnung läßt sich eine besonders stabile und einfach aufgebaute Einheit erreichen, wobei nur Schraubverbindungen zwischen den äußeren Befestigungsringen 112', 112'' und den jeweiligen Rotortragringen 114', 114'' sowie zwischen dem mittleren Befestigungsring 110 und dem ringförmigen Halteband 116 durchzuführen sind. Die Permanentmagnete 102, 102' und Weicheisen-Rückflußelemente 100 sind formkräftig gehalten.

Die Rotoranordnung gemäß den Fig. 8 und 12 stellen die Anordnung für eine Phase dar, bei zwei Phasen können zwei gleichgeartete Rotoranordnungen verwendet werden. Diese Anordnungen können je nach Statorausbildung auch gegeneinander winkelverdreht sein.

Ebenso können die beiden ringförmigen Anordnungen von Permanentmagneten 102, 102' und Weicheisen-Rückflußelementen 100 einer Phase zueinander winkelverschoben sein. Dies hängt von der Statoranordnung ab. Auf die Zahneinteilung der Statoranordnung bzw. der Rotoranordnung soll vorliegend nicht näher eingegangen werden, da diese Lehren ausreichend aus dem Stande der Technik bekannt sind.

Insgesamt läßt sich durch die vorliegende Transversalflußmaschine eine besonders einfach und kostengünstig aufzubauende und automatisch herzustellende Einheit realisieren, die einen funktionssicheren Betrieb auf wirkungsvolle Art und Weise ermöglicht. Insbesondere kann ein Betrieb im Hochleistungsbereich realisiert werden.

Die Erfindung soll durch das vorliegende Ausführungsbeispiel nicht beschränkt werden. Es ist durchaus möglich, eine andere Stator- und Rotoranordnung im Bereich der Erfindung zu wählen. Die Erfindung wird durch die nachfolgenden Patentansprüche definiert.

### [Bezugszeichenliste]

- 10: Transversalflußmaschine
- 12: Statoranordnung
- 14: Rotoranordnung, Phase 1
- 16: Rotoranordnung, Phase 2
- 20: Gehäuseteil, außen
- 21: Kühlkanal
- 22', 22'': Gehäuseseitenteil
- 24: erster Statortragring, (Phase 1)
- 25: Kühlkanal
- 26: zweiter Statortragring (Phase 2)
- 27: Kühlkanal
- 32',32'': Polring (Phase 1)
- 34: Poljoch (Phase 1)
- 36: Ringwicklung (Phase 1)
- 42', 42'': Polring (Phase 2)
- 44: Poljoch (Phase 2)
- 46: Ringwicklung (Phase 2)
- 50: Perforierung
- 52: Zahn des Polrings
- 54: halbkreisförmige Ausnehmung
- 56: Vorsprung
- 58: verjüngende Ausnehmung
- 60: Gewindebohrung
- 62: Zapfen
- 64: Gewindebohrung
- 100: Rückflußeisen
- 102, 102': Permanentmagnet
- 110: mittlerer Befestigungsring
- 112', 112'': äußerer Befestigungsring
- 114', 114'': Rotortragring
- 116: ringförmiges Halteband

## Patentansprüche

1. Transversalflußmaschine mit einer
Statoranordnung (12) umfassend ein Statorgehäuse (20, 22', 22'', 28), wenigstens ein innerhalb des Statorgehäuses (20, 22', 2'', 28) angeordnetes, sich in Umlaufrichtung erstreckendes Polsystem (32', 32'', 34, 42', 42'', 44) mit im wesentlichen U-förmigem Querschnitt und eine in der Ausnehmung zwischen den Schenkeln des U-förmigen Querschnitts aufgenommene, sich in Umlaufrichtung erstreckende Ringwicklung (36, 46)
sowie mit wenigstens einer
Rotoranordnung (14, 16), umfassend zumindest eine Reihe von abwechselnd angeordneten Permanentmagneten (102, 102') und Weicheisen-Rückflußelementen (100),
dadurch gekennzeichnet,
daß statorseitig jeweils zwischen der Ringwicklung (36, 46) und der Rotoranordnung ein Tragring (24, 26) vorgesehen ist, der an beiden Randbereichen äquidistant beabstandete Ausnehmungen (58) zur Aufnahme von in Richtung der Rotoranordnung vorstehenden Zähnen (52) des Polsystems (32', 32'', 42', 42'') aufweist und zur Stabilisierung des Polsystems (32', 32'', 34, 42', 42'', 44) und der Ringspule (36, 46) dient.

2. Transversalflußmaschine nach Anspruch 1,
dadurch gekennzeichnet,
daß sich die Ausnehmungen (58) zur Rotoranordnung hin verjüngen und die in den Ausnehmungen (58) aufgenommenen Zähne (52) des Polsystems (32', 32'', 34, 42', 42'', 44) komplementär ausgebildet sind.

3. Transversalflußmaschine nach Anspruch 1 oder 2,
dadurch gekennzeichnet,
daß jedes Polsystem (32', 32'', 34, 42', 42'', 44)) aus einem ringförmigen Poljoch (34, 44) und zwei in dessen seitlichen Bereichen daran anschließenden Polringen (32', 32'', 42', 42'') besteht.

4. Transversalflußmaschine nach einem der vorhergehenden Ansprüche,
dadurch gekennzeichnet,
daß die Polringe (32', 32'', 42', 42'') in ihren Poljochseitigen Bereichen durch Einschnitte oder Schlitze (50) derart perforiert sind, daß die Bildung von Wirbelströmen beim Magnetflußübergang von Poljoch (34, 44) zu den Polringen oder umgekehrt (32', 32'', 42', 42'') vermindert wird.

5. Transversalflußmaschine nach einem der vorhergehenden Ansprüche,
dadurch gekennzeichnet,
daß in jedem Tragring (24, 26) wenigstens ein Kühlkanal (25, 27) ausgebildet ist.

6. Transversalflußmaschine nach einem der vorhergehenden Ansprüche,
dadurch gekennzeichnet,
daß zwei Polsysteme (32', 32'', 34, 42', 42'', 44) durch ein Zwischenelement (28) voneinander getrennt sind.

7. Transversalflußmaschine nach einem der vorhergehenden Ansprüche,
dadurch gekennzeichnet,
daß die Statorelemente, insbesondere das Poljoch (34, 44), die Polringe (32', 32'', 42', 42''), die Ringspule (36, 46) und der Tragring (24, 26) jeweils als separate Teile ausgebildet sind, die durch das Statorgehäuse (20, 22', 22'', 28) zusammengehalten sind.

8. Transversalflußmaschine nach einem der vorhergehenden Ansprüche,
dadurch gekennzeichnet,
daß die aus der rotorzugewandten Seite des Tragrings oder der Tragringe (24, 26) und den rotorzugewandten Flächen der Zähne (52) bestehende Statorseite eine glatte Oberfläche aufweist.

9. Transversalflußmaschine nach einem der vorhergehenden Ansprüche,
dadurch gekennzeichnet,
daß im Statorgehäuse wenigstens ein Kühlkanal (21) ausgebildet ist.

10. Transversalflußmaschine nach einem der vorhergehenden Ansprüche,
dadurch gekennzeichnet,
daß der Tragring (24, 26) aus einer Keramik besteht

11. Rotoranordnung (14, 16) für eine Transversalflußmaschine, umfassend zumindest eine Reihe von abwechselnd angeordneten Permanentmagneten (102) und Weicheisen-Rückflußelementen (100), insbesondere nach einem der vorhergehenden Ansprüche,
dadurch gekennzeichnet,
daß jede sich in Umlaufrichtung erstreckende Reihe von abwechselnd angeordneten Permanentmagneten (102) und Weicheisen-Rückflußelementen (100) von einem Rotorträger gehalten ist, der an jeder Seite einen äußeren Befestigungsring (112', 112'') mit einem sich am statorseitigen äußeren Ende desjenigen axial nach innen erstreckenden Vorsprung aufweist, gegen welchen sich die Permanentmagnete (102) und die Weicheisen-Rückflußelemente (100) abstützen.

12. Rotoranordnung nach Anspruch 11,
dadurch gekennzeichnet,
daß bei zwei parallel nebeneinander verlaufenden Reihen von abwechselnd angeordneten Permanentmagneten (102) und Weicheisen-Rückflußelementen (100) ein dazwischen angeordneter, mittlerer Befestigungsring (110) vorgesehen ist, an dessen statorseitig äußeren Ende ein ringförmiges Halteband (116) angeordnet oder anordenbar ist, gegen welchen sich die Reihe von abwechselnd angeordneten Permanentmagneten (102, 102') und Weicheisen-Rückflußelementen (100) abstützt.

13. Rotoranordnung nach Anspruch 11 oder 12,
dadurch gekennzeichnet,
daß die äußeren Befestigungsringe (112', 112'') und/oder der mittlere Befestigungsring (110) an ihren statorfernen Enden mit einem oder mehreren Tragringen (114', 114'') verbunden sind, auf denen die Permanentmagnete (102) und Weicheisen-Rückflußelemente angeordnet sind.

14. Rotoranordnung nach einem der Ansprüche 12 oder 13,
dadurch gekennzeichnet,
daß im mittleren Befestigungsring (110) Ausnehmungen auf Höhe der Weicheisen-Rückflußelemente (100)für die Aufnahme von Permanentmagneten (102') vorgesehen sind.

15. Rotoranordnung nach einem der Ansprüche 11 bis 14,
dadurch gekennzeichnet,
daß die Permanentmagnete (102)aus der Reihe von abwechselnd angeordneten Permanentmagneten (102) und Weicheisen-Rückflußelementen (100)gegenüber den Weicheisen-Rückflußelementen (100) radial und/oder axial verlängert sind.

16. Rotoranordnung nach einem der Ansprüche 11 bis 15,
dadurch gekennzeichnet,
daß zwischen den äußeren Befestigungsringen (112', 112'') oder zwischen einem äußeren Befestigungsring (112'. 112'') und dem mittleren Befestigungsring (110) die Permanentmagnete (102, 102') und/oder die Weicheisen-Rückflußelemente (100) derart ausgebildet sind, daß die statorseitige Fläche des Rotors insgesamt plan ausgebildet ist.
